# EUROPEAN PATENT APPLICATION

(11) **EP 4 387 338 A1**
(43) Date of publication of application: **19.06.2024**
(21) Application number: 21953129.0
(22) Date of filing: 11.08.2021
(51) Int. Cl.: H04W 52/02, H04W 68/02

(54) **POWER SAVING METHOD AND APPARATUS, DEVICE, AND READABLE STORAGE MEDIUM**

(71) Applicant: Beijing Xiaomi Mobile Software Co., Ltd., Beijing 100085 (CN)
(72) Inventor: SHI, Rao, Beijing 100085 (CN); JIANG, Xiaowei, Beijing 100085 (CN)
(74) Representative: Steinbauer, Florian
(86) International application number: PCT/CN2021/112155
(87) International publication number: WO 2023/015507

(57) **Abstract**

The present disclosure relates to the field of communications, and provides a power saving method and apparatus, a device, and a readable storage medium. The method comprises: receiving a paging early indication (PEI), the PEI comprising a group of downlink monitoring timings, a search space corresponding to a downlink monitoring timing in the PEI being associated with a paging search space of a paging timing corresponding to the PEI, and the group of downlink monitoring timings corresponding to at least two transmission beams; and monitoring the paging timing on the basis of the PEI. When a PEI is introduced for an NR system, a scenario of multiple beams needs to be considered; in order for this, a monitoring mode of the PEI is designed, such that UE can correctly monitor a PEI signal.

## Description

### TECHNICAL FIELD

The present disclosure relates to the field of communications and, in particular, to a method and apparatus for power saving, device, and readable storage medium.

### BACKGROUND

The network uses a paging mechanism to find a UE that is in an IDLE state or an INACTIVE state. When there is downlink data or signaling that needs to be sent in the network, a paging message is sent to allow the UE to initiate an RRC connection establishment procedure, or to initiate an RRC connection resume procedure so that the UE can return to the RRC connection state.

As for the paging mechanism, the UE uses Discontinuous Reception (DRX) in the IDLE/INACTIVE state to monitor the paging and monitors one Paging Occasion (PO) in each DRX cycle, where the PO contains multiple PDCCH monitoring occasions. In the related art, a Paging Early Indication (PEI) is introduced, through which it is determined in advance whether there is a paging message sent or not and the UE is instructed whether it needs to perform the paging procedure or not.

However, there is currently no PEI indication method for multi-beam scenarios.

### SUMMARY

Embodiments of the present disclosure provide a method and apparatus for power saving, device, and readable storage medium, through which the UE can be guaranteed to monitor PEI signals correctly in multi-beam scenarios. The technical solution is described as follows.

According to an aspect of the present disclosure, there is provided a method for power saving, applied in a terminal, the method including:
receiving a paging early indication including a set of downlink monitoring occasions, wherein a search space corresponding to the set of downlink monitoring occasions in the paging early indication is associated with a paging search space of a paging occasion corresponding to the paging early indication, the set of downlink monitoring occasions corresponding to at least two transmission beams; and
monitoring the paging occasion based on the paging early indication.

According to another aspect, there is provided a method for power saving, applied in a network device, the method including:
periodically broadcasting a paging early indication through at least two transmission beams of a SSB, where the paging early indication includes a downlink monitoring occasion, a search space corresponding to the downlink monitoring occasion being associated with a paging search space of a paging occasion corresponding to the paging early indication, and where the paging early indication is configured for instructing a terminal to monitor the paging occasion.

According to another aspect, there is provided an apparatus for power saving, the apparatus including:
a receiving module configured to receive a paging early indication including a set of downlink monitoring occasions, where a search space corresponding to the set of downlink monitoring occasions in the paging early indication is associated with a paging search space of a paging occasion corresponding to the paging early indication, the set of downlink monitoring occasions corresponding to at least two transmission beams; and
a processing module configured to monitor the paging occasion based on the paging early indication.

According to another aspect, there is provided an apparatus for power saving, applied to a network device, the apparatus including:
a sending module configured to periodically broadcast a paging early indication through at least two transmission beams of a SSB, where the paging early indication includes a downlink monitoring occasion, a search space corresponding to the downlink monitoring occasion being associated with a paging search space of a paging occasion corresponding to the paging early indication, and where the paging early indication is configured for instructing a terminal to monitor the paging occasion.

According to another aspect, there is provided a terminal, the terminal including:
a processor; and
a transceiver connected to the processor;
where the processor is configured to execute executable instructions to implement the method for power saving as described in the above embodiments of the present disclosure.

According to another aspect, there is provided a network device, the network device including:
a processor; and
a transceiver connected to the processor;
where the processor is configured to execute executable instructions to implement the method for power saving as described in the above embodiments of the present disclosure.

According to another aspect, there is provided a computer-readable storage medium in which at least one instruction, at least one segment of a program, a code set, or a set of instructions is stored, and the at least one instruction, at least one segment of the program, the code set, or the set of instructions is executed by a processor to implement the method for power saving as described in the above embodiments of the present disclosure.

The advantages of the technical solution provided by embodiments of the present disclosure include at least:

When PEI is introduced for NR systems, multi-beam scenarios need to be considered, and for this reason the monitoring mode of PEI is designed so as to ensure that the UE is able to monitor PEI signals correctly.

### BRIEF DESCRIPTION OF THE DRAWINGS

In order to more clearly illustrate the technical solutions in the embodiments of the present disclosure, the accompanying drawings to be used in the description of the embodiments will be briefly introduced below. It will be obvious that the accompanying drawings in the following description are only some of the embodiments of the present disclosure, and that other accompanying drawings can be obtained based on these drawings without creative labor for a person of ordinary skill in the field.
FIG. 1 is a block diagram of architecture of a communication system according to embodiments of the present disclosure.
FIG. 2 is a schematic diagram of a mode of monitoring occasions for paging on time domain resources illustrated according to an exemplary embodiment of the present disclosure.
FIG. 3 is a schematic diagram of PEI indication of monitoring PO illustrated according to an exemplary embodiment of the present disclosure.
FIG. 4 is a flowchart of a method for power saving according to an exemplary embodiment of the present disclosure.
FIG. 5 is a schematic diagram of periodic broadcasting of SSB messages using a beam sweeping mechanism according to an exemplary embodiment of the present disclosure.
FIG. 6 is a schematic diagram of an arrangement of PMOs in a PEI signal according to an exemplary embodiment of the present disclosure.
FIG. 7 is a schematic diagram of a processing method for PMO overlapping with an uplink resource according to an exemplary embodiment of the present disclosure.
FIG. 8 is a schematic diagram of a process for monitoring PMO according to an exemplary embodiment of the present disclosure.
FIG. 9 is a schematic diagram of monitoring PO according to an exemplary embodiment of the present disclosure.
FIG. 10 is a flowchart of a method for power saving according to an exemplary embodiment of the present disclosure.
FIG. 11 is a schematic diagram of a structure of an apparatus for power saving illustrated according to an exemplary embodiment of the present disclosure.
FIG. 12 is a schematic diagram of a structure of an apparatus for power saving illustrated according to another exemplary embodiment of the present disclosure.
FIG. 13 is a block diagram of a structure of a communication device illustrated according to an exemplary embodiment of the present disclosure.

### DETAILED DESCRIPTION

In order to make the objects, technical solutions and advantages of the present disclosure clearer, the embodiments of the present disclosure will be described in further detail below in conjunction with the accompanying drawings.

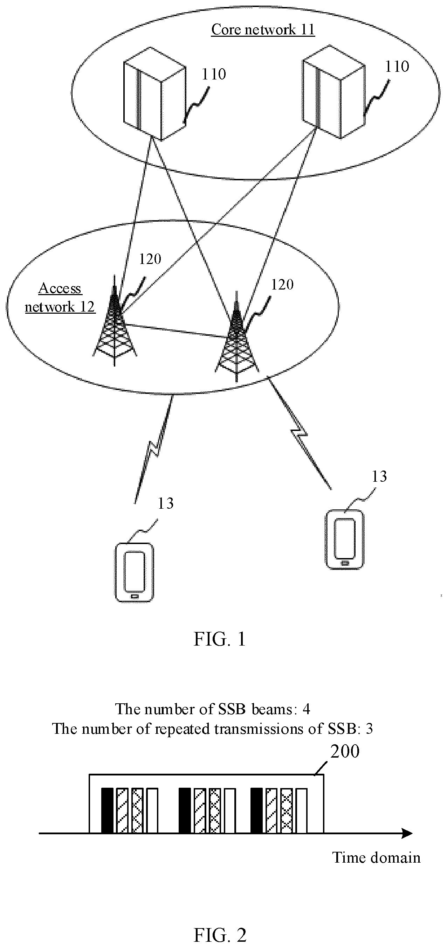

FIG. 1 illustrates a block diagram of a communication system according to an exemplary embodiment of the present disclosure. The communication system may include a core network 11, an access network 12, and a terminal 13.

The core network 11 includes a number of core network devices 110, which include devices such as an Access and Mobility Management Function (AMF), a Session Management Function (SMF), and a User Plane Function (UPF). The AMF is used to control the terminal's access authority and switching, and other functions. The SMF is used to provide server continuity, uninterrupted user experience of servers, such as Internet Protocol (IP) address and anchor changes, and the like.

The access network 12 includes a number of access network devices 120. The access network devices 120 may be base stations, which are devices deployed in the access network to provide wireless communication functions to terminals. The base stations may include various forms of macro base stations, micro base stations, relay stations, access points, and the like. In systems that use different wireless access technologies, the name of the device with the "base station" function may be different. For example, in the Long Term Evolution (LTE) system, it is called eNodeB or eNB; and in the 5G New Radio (NR) system, it is called gNode B or gNB. As communication technology evolves, the name "base station" may change in description. For convenience, in the embodiments of the present disclosure, the above-mentioned devices that provide wireless communication functions for the terminal are collectively referred to as access network devices.

The terminal 13 may include a variety of handheld devices, in-vehicle devices, wearable devices, computing devices, or other processing devices connected to a wireless modem having wireless communication functions, as well as various forms of User Equipment (UE), mobile stations (MS), terminal devices, and the like. For ease of description, the devices mentioned above are collectively referred to as terminals. The access network device 120 and the terminal 13 communicate with each other via a kind of air interface technology, such as a Uu interface. 5G-based industrial sensors, video surveillance, and wearable devices, etc., do not need to support such large bandwidths, especially industrial sensors, which require only a few megabytes of transmission bandwidth. Such terminals may be categorized as a new type of terminal in subsequent versions of 5G enhancements, with improved technical features.

Optionally, in the process of wireless communication between the terminal 13 and the access network device 120 as described above, the wireless communication may be carried out through an authorized frequency band or through an unauthorized frequency band.

In an idle state, the terminal needs to perform paging detections according to the paging occasion cycle.

The network uses a paging mechanism to find a UE that is in an IDLE state or an INACTIVE state. When there is downlink data or signaling that needs to be sent in the network, a paging message is sent to allow the UE to initiate a Radio Resource Control (RRC) connection establishment procedure, or to initiate an RRC connection resume procedure so that the UE can return to the RRC connection state. In addition, through the sending of a short message, paging can also be used to notify UEs in all states under network coverage to receive system message update, as well as to notify other warning information.

As for the paging mechanism, the UE uses DRX in the IDLE/INACTIVE state to monitor the paging and monitors one Paging Occasion (PO) in each DRX cycle, where the PO contains multiple Physical Downlink Control Channel (PDCCH) monitoring occasions and may contain multiple time slots or symbols. All of these PDCCH monitoring occasions can be used to send paging control information (i.e., paging DCI), where the paging DCI is used to instruct the UE to decode the corresponding Physical Downlink Shared Channel (PDSCH) to acquire the paging message.

In the multi-beam scenario, the paging DCI needs to be repeatedly sent on multiple PDCCH monitoring occasions of the same PO, which can be understood as each PDCCH monitoring occasion corresponds to one of the sending beams. The UE selects one of the beams available for receiving the paging DCI based on its own implementation.

Schematically, referring to FIG. 2, it illustrates a current mode of monitoring occasions for paging on time domain resources. As shown in FIG. 2, a paging occasion 200 includes 12 downlink monitoring occasions, where the 12 downlink monitoring occasions are determined by the number of beams (i.e., 4) of a Synchronization Signal and PBCH Block (SSB) and the number of repetitions (i.e., 3) of the SSB, and the transmission of the SSB is performed periodically and sequentially on the 4 beams.

In a paging system, each Paging Frame (PF) may include multiple POs, and the PDCCH monitoring occasions of each PO needs to be mapped to a paging search space configured by the network according to a parameter, where the parameter is used to indicate a starting position of a first PDCCH monitoring occasion of each PO in the paging search space, and if the parameter is not configured, the starting position of the i^{th} PO is equal to a position of the (i×S×X)^{th} paging search space. S is the number of beams, and X is the number of repetitions of the SSB.

Although the UE needs to monitor a PO for paging in each DRX cycle, it does not mean that there will be paging messages sent from the network in each DRX cycle, and therefore, unnecessary monitoring by the UE may be generated.

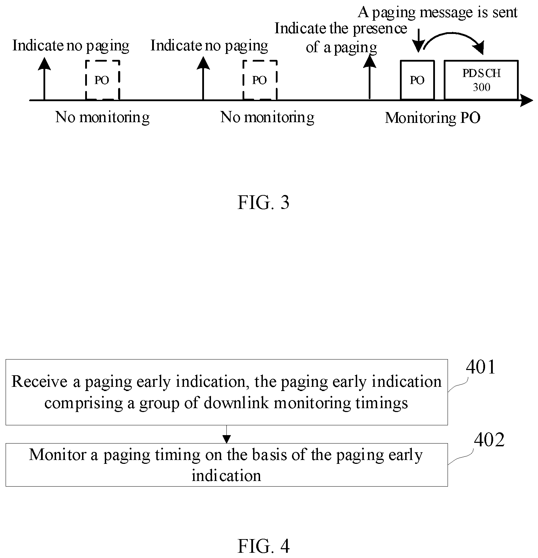

Considering the power saving enhancement for the paging mechanism, the introduction of Paging Early Indication (PEI) is considered in the version NR R17, through which it is determined in advance whether there is a paging message sent or not and the UE is instructed whether it needs to perform the paging procedure or not. If the PEI indicates that there is no paging message sent, the UE does not monitor the PDCCH monitoring occasions of the PO, thus achieving power saving. Schematically, as shown in FIG. 3, when the PEI indicating no paging is received in the DRX cycle, the monitoring for the PO is skipped, and when the PEI indicating the presence of paging is received in the DRX cycle, the PO is monitored, and data is transmitted on PDSCH 300 based on the monitoring result of the PO.

The communication system as well as the service scenarios described in the embodiments of the present disclosure are for the purpose of more clearly illustrating the technical solutions of the embodiments of the present disclosure and do not constitute a limitation of the technical solutions provided by the embodiments of the present disclosure, and a person of ordinary skill in the art may know that, with the evolution of the communication system and the emergence of new service scenarios, the technical solutions provided by the embodiments of the present disclosure are equally applicable to similar technical problems.

FIG. 4 is a flowchart of a method for power saving according to an exemplary embodiment of the present disclosure. The method is illustrated by using an example of the method applied to a terminal. As shown in FIG. 4, the method includes the following steps.

Step 401, receiving a paging early indication, the paging early indication including a set of downlink monitoring occasions.

A search space corresponding to the set of downlink monitoring occasions in the paging early indication is associated with a paging search space of a paging occasion corresponding to the paging indication, the set of downlink monitoring occasions corresponding to at least two transmission beams.

Optionally, the paging early indication includes a first number of downlink monitoring occasions, the first number being determined by a number of transmission beams of a SSB and a number of repeated transmissions of the downlink monitoring occasions.

Optionally, the PEI signal is a set of PDCCH Monitoring Occasions (PMOs). Optionally, the search space of the PEI is associated with the paging search space of the corresponding PO.

Optionally, one PEI signal includes S×X continuous PMOs, where S represents the number of SSB transmission beams transmitted by the current cell, and X represents the number of repeated transmissions of each SSB transmission beam. The number of repeated transmissions of the SSB transmission beam may be preconfigured; or, the number of repeated transmissions of the SSB transmission beam may be predefined; or, the number of repeated transmissions of the SSB transmission beam is default. Optionally, when the number of repeated transmissions of the SSB transmission beam is not preconfigured or predefined, a default value of the number of repeated transmissions of the beam is used, e.g., the default value is 1.

The downlink monitoring occasions are periodically arranged in the paging early indication according to the periodic broadcast order of the transmission beam.

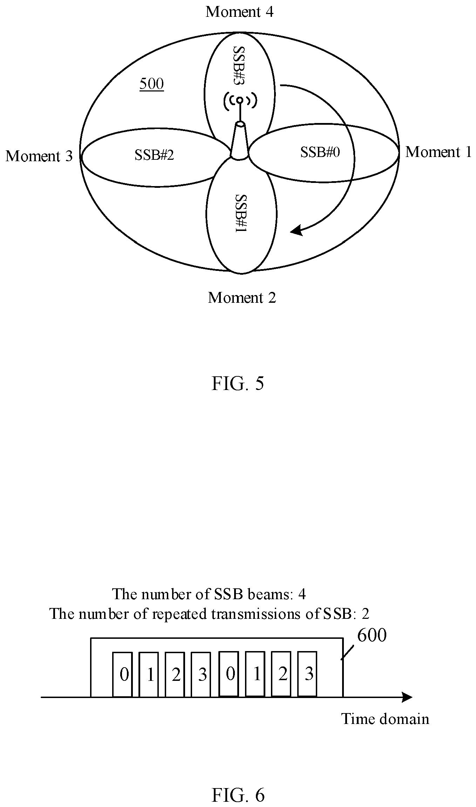

Schematically, referring to FIG. 5, the SSB message is periodically broadcast in the NR using a beam sweeping mechanism, i.e., the signal is sent to different directions of a beam within cell 500 at different moments. The SSB message helps the UE to complete the synchronization process so that it can correctly receive signals sent by the base station as well as to acquire the initial information about the access to the cell 500. When receiving the PEI and PO signals, the UE can only receive the signals at the PDCCH moment corresponding to that beam.

Among S×X continuous PMOs, the (x×S+K)^{th} PMO corresponds to the K^{th} transmission beam of the SSB, where x = 0, 1, ..., X-1, X representing the number of repeated transmissions, i.e., x referring to the x^{th} repeated transmission; and K = 1, 2... S, S representing S transmission beams of the SSB.

In some embodiments, the search space of the PEI is preconfigured or, alternatively, the search space of the PEI is predefined or, alternatively, the search space of the PEI is a default space corresponding to the paging search space.

In this embodiment, taking the determination of the search space of the PEI in a configured manner as an example (i.e., the terminal receives configuration information), the configuration information is used for indicating an association relationship between the search space corresponding to the downlink monitoring occasion and the paging search space.

In some embodiments, the configuration information includes a first indication field, the first indication field being used for indicating an offset value between the search space corresponding to the downlink monitoring occasion and the paging search space; or, the configuration information includes a second indication field, the second indication field being used for indicating a search space identifier corresponding to the downlink monitoring occasion, the search space identifier corresponding to the paging search space.

That is, the network allocates a search space for the PEI, and the allocated search space is associated with a paging search space corresponding to the PEI, in the form of the following: 1. by means of setting an offset value, the search space of the PEI advances the paging search space by one offset value; and 2. allocating a dedicated PEI search space identifier for the paging search space, and the PEI signal corresponding to the PEI search space is used to respond to a PO in the paging search space.

The resources on the search space of the PEI are used to carry the transmission of the PDCCH monitoring occasions of the PEI.

In some embodiments, when an i^{th} downlink monitoring occasion overlapped with an uplink resource exists in a set of downlink monitoring occasions, the i^{th} downlink monitoring occasion overlapped with the uplink resource is offset to a (i+1)^{th} search space, i≥0 and i is an integer.

That is, if there is a PMO in the PEI whose search space position overlaps with an uplink symbol, the PMO is offset to the next PEI search space position.

Optionally, the number of repeated transmissions of the downlink monitoring occasions is at least two for each transmission beam.

Step 402, monitoring the paging occasion based on the paging early indication.

In some embodiments, a downlink monitoring occasion is selected, among a set of downlink monitoring occasions, for paging indication monitoring based on terminal implementation.

In some embodiments, since the network is not sure of the receiving beam corresponding to the terminal when indicating the PMO to the terminal, the PMO content of the indication is the same for a plurality of beams, so that when a paging indication signal is detected by the terminal on any one of the downlink monitoring occasions, the terminal stops monitoring the subsequent downlink monitoring occasions for the same PEI.

Optionally, when a downlink monitoring occasion indicating a presence of a paging exists, a paging message is received on the paging occasion corresponding to the downlink monitoring occasion; or when a downlink monitoring occasion does not indicate a presence of a paging, monitoring of the paging occasion corresponding to the downlink monitoring occasion is skipped.

Optionally, according to a transmission beam corresponding to the downlink monitoring occasion, a monitoring position of a transmission beam corresponding to the paging occasion is monitored, and the paging message is received.

Schematically, in the case where the number of repeated transmissions of the beam is greater than 1, when a PEI signal is detected by the UE, there is no need to monitor subsequent PMOs within that PEI.

The UE may perform paging indication monitoring at any PMO in the PEI signal. When the UE receives a paging indication at any one of the PMOs in the PEI signal, it responds to the PO corresponding to that PMO, i.e., it monitors or does not monitor that PO, and after receiving the PMO signal, according to the SSB beam corresponding to the PMO signal, the UE monitors the monitoring position of the PO corresponding to the SSB beam.

Schematically, if the set of SSB bursts (i.e., SSB-Positions In Burst) broadcast by the current network in the system information is configured to be 4 (i.e., there are 4 beam transmission directions), and the number of repeated transmissions corresponding to each SSB beam direction is configured to be 2, there are 8 PMOs included in the PEI signal respectively corresponding to the PEI search space as shown in FIG. 6. As shown in FIG. 6, in a PEI signal 600, the PMOs are sequentially arranged in the order of the corresponding SSB beam directions. That is, the (x×4+K)^{th} PMO corresponds to the beam direction of the K^{th} SSB. For example, if x=0 represents the first one of the repeated transmissions of the SSB beam, and K=3 represents the 3rd SSB beam, the (0×4+3)^{th} PMO (i.e., the third PMO) corresponds to the beam direction of the 3rd SSB during the first one of the repeated transmissions of the SSB beam; x=1 represents the second one of the repeated transmissions of the SSB beam, and K=1 represents the 1st SSB beam, then the (1×4+1)^{th} PMO (i.e., the fifth PMO) corresponds to the 1st SSB beam direction.

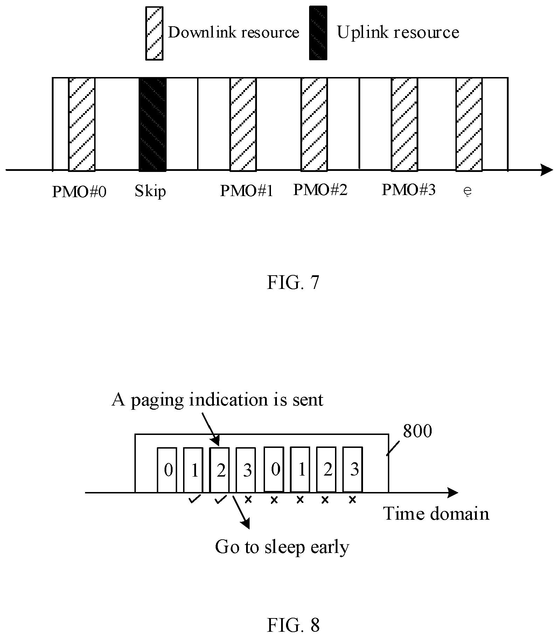

If the search space of the PEI is occupied by an uplink resource, i.e., the current position is at the uplink symbol, the current PMO of the PEI is offset to the next search space of the PEI. Schematically, referring to FIG. 7, PMO#0, PMO#1, PMO#2, and PMO#3 are sequentially arranged as shown in FIG. 7. Since PMO#1 overlaps with the uplink resource, PMO#1, PMO#2, and PMO#3 are sequentially deferred backward by one PEI search space.

When the number of repeated transmissions corresponding to each SSB beam is greater than 1, if the UE chooses to monitor the PEI on PMO#1 and PMO#2 based on the implementation, as long as a PEI signal is detected on any one of the PMOs, it stops monitoring all subsequent PMOs within the PEI.

Schematically, as shown in FIG. 8, for a PEI signal 800, the UE chooses to monitor the PEI on PMO#1 and PMO#2, and has detected a paging indication on PMO#2, and therefore the UE goes to sleep early and stops monitoring subsequent PMOs.

After receiving a paging indication, if it indicates that there is a paging sent from the current network, the UE performs the paging process at the PO corresponding to the PEI and receives the paging message, otherwise (it indicates that there is no paging in the network), the UE does not monitor the PO.

After the UE receives a paging indication at the PMO of a certain PEI, it can monitor, according to a SSB beam corresponding to the PMO, a monitoring position corresponding to the SSB beam within the PO.

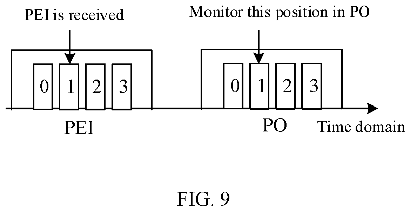

As shown in FIG. 9, if a paging indication is received on PMO#1 in the PEI, which corresponds to the first SSB beam, a paging message is monitored at the position corresponding to the first beam in the PO.

In summary, the method for power saving provided by embodiments of the present disclosure is directed for a multi-beam scenario that needs to be considered when PEI is introduced into the NR system, which is designed for the monitoring mode of PEI so as to ensure that the UE can correctly monitor the PEI signal.

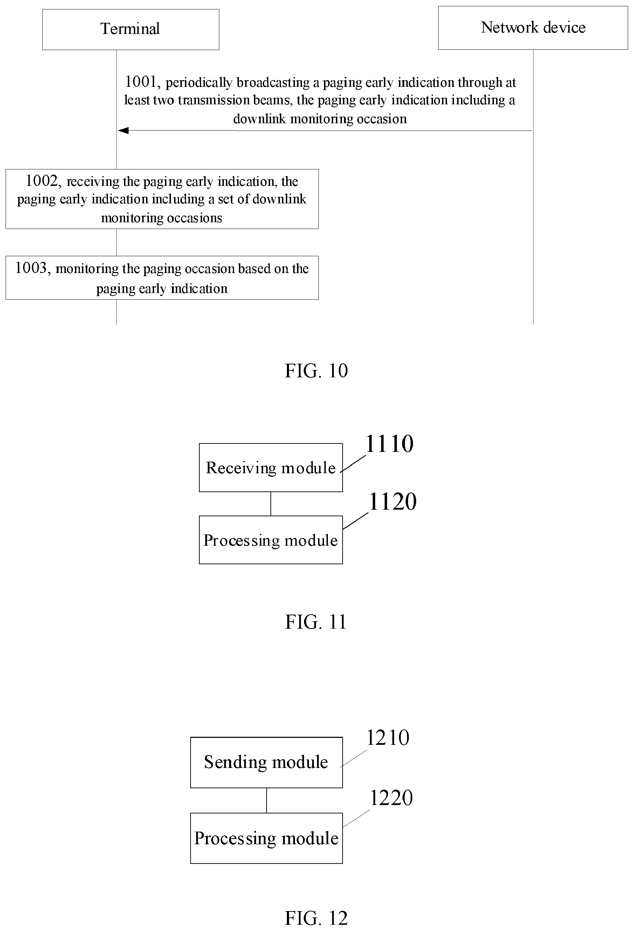

FIG. 10 is a flowchart of a method for power saving provided by an exemplary embodiment of the present disclosure. The method is illustrated by an example of the method being applied to the above-described communication system including a terminal and a network device. As shown in FIG. 10, the method includes the following steps.

Step 1001, periodically broadcasting, by a network device, a paging early indication through at least two transmission beams, the paging early indication including a downlink monitoring occasion.

A search space corresponding to the downlink monitoring occasion in the paging early indication (PEI) is associated with a paging search space of a paging occasion corresponding to the paging indication. The network device broadcasts the paging early indication in the manner shown in FIG. 5.

Step 1002, receiving, by a terminal, the paging early indication, the paging early indication including a set of downlink monitoring occasions.

The set of downlink monitoring occasions correspond to at least two transmission beams.

Optionally, the paging early indication includes a first number of downlink monitoring occasions, the first number being determined by a number of transmission beams and a number of repeated transmissions of the downlink monitoring occasions.

Optionally, the search space of the PEI is associated with the paging search space of the corresponding PO.

Optionally, a PEI signal includes S×X continuous PMOs, and a (x×S+K)^{th} PMO corresponds to the K^{th} transmission beam of the SSB, where x = 0, 1, ..., X-1, X representing that there are X repeated transmissions of the beam; and K = 1, 2... S, S representing S SSB beam directions.

In some embodiments, the search space of the PEI is preconfigured or, alternatively, the search space of the PEI is predefined or, alternatively, the search space of the PEI is a default space corresponding to the paging search space.

That is, the network allocates a search space for the PEI, and the allocated search space is associated with a paging search space corresponding to the PEI, in the form of the following: 1. by means of setting an offset value, the search space of the PEI advances the paging search space by one offset value; and 2. allocating a dedicated PEI search space identifier for the paging search space, and the PEI signal corresponding to the PEI search space is used to respond to a PO in the paging search space.

In some embodiments, when an i^{th} downlink monitoring occasion overlapped with an uplink resource exists in a set of downlink monitoring occasions, the i^{th} downlink monitoring occasion overlapped with the uplink resource is offset to a (i+1)^{th} search space, i≥0 and i is an integer.

Optionally, the number of repeated transmissions of the downlink monitoring occasions is at least two for each transmission beam.

Step 1003, monitoring, by the terminal, the paging occasion based on the paging early indication.

In some embodiments, a downlink monitoring occasion is selected, among a set of downlink monitoring occasions, for paging indication monitoring based on terminal implementation.

In some embodiments, since the network is not sure of the receiving beam corresponding to the terminal when indicating the PMO to the terminal, the PMO content of the indication is the same for a plurality of beams, so that when a paging indication signal is detected by the terminal on any one of the downlink monitoring occasions, the terminal stops monitoring the subsequent downlink monitoring occasions for the same PEI.

Optionally, when a downlink monitoring occasion indicating a presence of a paging exists, a paging message is received on the paging occasion corresponding to the downlink monitoring occasion; or when a downlink monitoring occasion does not indicate a presence of a paging, monitoring of the paging occasion corresponding to the downlink monitoring occasion is skipped.

Optionally, according to a transmission beam corresponding to the downlink monitoring occasion, a monitoring position of a transmission beam corresponding to the paging occasion is monitored, and the paging message is received.

In summary, the method for power saving provided by embodiments of the present disclosure is directed for a multi-beam scenario that needs to be considered when PEI is introduced into the NR system, which is designed for the monitoring mode of PEI so as to ensure that the UE can correctly monitor the PEI signal.

FIG. 11 is a block diagram of a structure of an apparatus for power saving provided by an exemplary embodiment of the present disclosure. As shown in FIG. 11, the apparatus includes:
a receiving module 1110 configured to receive a paging early indication including a set of downlink monitoring occasions, where a search space corresponding to the set of downlink monitoring occasions in the paging early indication is associated with a paging search space of a paging occasion corresponding to the paging early indication, the set of downlink monitoring occasions corresponding to at least two transmission beams; and
a processing module 1120 configured to monitor the paging occasion based on the paging early indication.

In an optional embodiment, the paging early indication includes a first number of downlink monitoring occasions, the first number being determined by a number of transmission beams of a Synchronization Signal (SSB) and a number of repeated transmissions of the downlink monitoring occasions.

In an optional embodiment, the paging early indication includes S×X continuous downlink monitoring occasions, S representing the number of transmission beams of the SSB, X representing a number of repeated transmissions of the transmission beam of the SSB; and a (x×S+K)^{th} downlink monitoring occasion corresponds to a K^{th} transmission beam of the SSB, where x = 0, 1, ..., X-1, and K = 1, 2, ...., S.

In an optional embodiment, the number of repeated transmissions is preconfigured; or, the number of repeated transmissions is predefined; or, the number of repeated transmissions is default.

In an optional embodiment, the processing module 1120 is further configured to offset, in response to that an i^{th} downlink monitoring occasion overlapped with an uplink resource exists in the set of downlink monitoring occasions, the i^{th} downlink monitoring occasion overlapped with the uplink resource to a (i+1)^{th} search space, i being an integer greater than or equal to 0.

In an optional embodiment, the receiving module is further configured to receive configuration information for indicating an association relationship between the search space corresponding to the set of downlink monitoring occasions and the paging search space.

In an optional embodiment, the configuration information includes a first indication field for indicating an offset value between the search space corresponding to the set of downlink monitoring occasions and the paging search space; or
the configuration information includes a second indication field for indicating a search space identifier corresponding to the set of downlink monitoring occasions, the search space identifier corresponding to the paging search space.

In an optional embodiment, the number of repeated transmissions of the downlink monitoring occasions is at least two for each transmission beam of the SSB.

In an optional embodiment, the processing module 1120 is further configured to select, among the set of downlink monitoring occasions, a downlink monitoring occasion for paging indication monitoring based on terminal implementation.

In an optional embodiment, the processing module 1120 is further configured to, when a paging indication signal is detected by the terminal on any one of the set of downlink monitoring occasions, stop monitoring subsequent downlink monitoring occasions for the same paging early indication.

In an optional embodiment, the processing module 1120 is further configured to, when a downlink monitoring occasion indicating a presence of a paging exists, receive a paging message on the paging occasion corresponding to the downlink monitoring occasion; or
the processing module 1120 is further configured to, when a downlink monitoring occasion does not indicate a presence of a paging, skip monitoring of the paging occasion corresponding to the downlink monitoring occasion.

In an optional embodiment, the processing module 1120 is further configured to monitor, according to a transmission beam of a SSB corresponding to the downlink monitoring occasion, a monitoring position of a transmission beam of a SSB corresponding to the paging occasion and receive the paging message.

FIG. 12 is a block diagram of a structure of an apparatus for power saving provided by an exemplary embodiment of the present disclosure. As shown in FIG. 12, the apparatus includes:
a sending module 1210 configured to periodically broadcast a paging early indication through at least two transmission beams of a SSB, where the paging early indication includes a downlink monitoring occasion, a search space corresponding to the downlink monitoring occasion being associated with a paging search space of a paging occasion corresponding to the paging early indication, and where the paging early indication is configured for instructing a terminal to monitor the paging occasion.

In an optional embodiment, a number of repeated transmissions of the downlink monitoring occasion is preconfigured by the network device for the terminal; or, the number of repeated transmissions is predefined; or, the number of repeated transmissions is default.

In an optional embodiment, the apparatus further includes:
a processing module 1220 is configured to offset, in response to that the downlink monitoring occasion is overlapped with an uplink resource, the downlink monitoring occasion overlapped with the uplink resource to a next search space.

In an optional embodiment, the sending module is further configured to send configuration information to the terminal, where the configuration information is configured for indicating an association relationship between the search space corresponding to the downlink monitoring occasion and the paging search space.

In an optional embodiment, the configuration information includes a first indication field for indicating an offset value between the search space corresponding to the downlink monitoring occasion and the paging search space; or
the configuration information includes a second indication field for indicating a search space identifier corresponding to the downlink monitoring occasion, the search space identifier corresponding to the paging search space.

In an optional embodiment, a number of repeated transmissions of the downlink monitoring occasions is at least two for each transmission beam of the SSB.

In summary, the apparatus for power saving provided by embodiments of the present disclosure is directed for a multi-beam scenario that needs to be considered when PEI is introduced into the NR system, which is designed for the monitoring mode of PEI so as to ensure that the UE can correctly monitor the PEI signal.

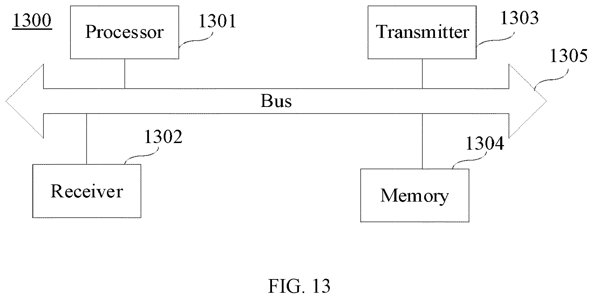

FIG. 13 illustrates a schematic diagram of a structure of a communication device 1300 (terminal or access network device) provided by an exemplary embodiment of the present disclosure. The terminal includes: a processor 1301, a receiver 1302, a transmitter 1303, a memory 1304, and a bus 1305.

The processor 1301 includes one or more processing cores, and the processor 1301 performs various functional applications as well as information processing by running software programs as well as modules.

The receiver 1302 and the transmitter 1303 may be implemented as a communication component, which may be a communication chip.

The memory 1304 is connected to the processor 1301 via bus 1305.

The memory 1304 may be used to store the at least one instruction, and the processor 1301 is used to execute the at least one instruction to implement the various steps in the method embodiments described above.

In addition, the memory 1304 may be implemented by any type of volatile or non-volatile storage device or a combination thereof, volatile or non-volatile storage devices include, but are not limited to: disks or optical disks, Electrically Erasable programmable Read Only Memory (EEPROM), Erasable Programmable Read Only Memory (EPROM), Static Random Access Memory (SRAM), Read-Only Memory (ROM), Magnetic Memory, Flash Memory, and Programmable Read-Only Memory (PROM).

There is provided a non-transitory computer-readable storage medium, which enables a terminal to perform the method for power saving when instructions in the non-transitory computer storage medium are executed by a processor of the terminal.

In summary, the apparatus for power saving provided in the present disclosure, by introducing a switch in a PEI so as to indicate the way in which the UE parses the TRS available information, avoids the waste of resources caused by indicating the TRS change situation only through a Paging DCI and avoids the problem of low flexibility caused by indicating the TRS change situation only through a SIB, and improves the flexibility of the indication of the TRS change situation and the utilization rate of the resources, thus achieving the effect of power saving.

An exemplary embodiment of the present disclosure further provides a power saving system, the system including: a terminal and an access network device.

The terminal includes an apparatus for power saving as provided by the embodiment shown in FIG. 11.

The access network device includes an apparatus for power saving as provided by the embodiment shown in FIG. 12.

An exemplary embodiment of the present disclosure further provides a computer-readable storage medium, the computer-readable storage medium having stored therein at least one instruction, at least one segment of a program, a code set, or a set of instructions, and the at least one instruction, the at least one segment of a program, the set of codes or set of instructions being executed by the processor to realize the steps performed by a terminal in the method for power saving provided by the various embodiments of the method described above.

It should be understood that the term "a plurality of" is used herein to refer to two or more. The term "and/or" describes an association relationship of the associated objects, indicating that three types of relationships may exist, e.g., A and/or B, which may indicate A alone, both A and B, and B alone. The character "/" generally indicates an "or" relationship between an associated object before the character and an associated object after the character.

Other embodiments of the present disclosure will be easily conceived by those skilled in the art upon consideration of the specification and practice of the invention disclosed herein. The present disclosure is intended to cover any variations, uses, or adaptations of the present disclosure that follow the general principles of the present disclosure and include common knowledge or customary technical means in the art not disclosed herein. The specification and embodiments are to be regarded as exemplary only, and the true scope and spirit of the present disclosure is indicated by the following claims.

It is to be understood that the present disclosure is not limited to the precise structure that has been described above and illustrated in the accompanying drawings, and that various modifications and changes may be made without departing from its scope. The scope of the present disclosure is limited only by the appended claims.

## Claims

1. A method for power saving, applied in a terminal, the method comprising:
receiving a paging early indication comprising a set of downlink monitoring occasions, wherein a search space corresponding to the set of downlink monitoring occasions in the paging early indication is associated with a paging search space of a paging occasion corresponding to the paging early indication, the set of downlink monitoring occasions corresponding to at least two transmission beams; and
monitoring the paging occasion based on the paging early indication.

2. The method of claim 1, wherein the paging early indication comprises a first number of downlink monitoring occasions, the first number being determined by a number of transmission beams of a Synchronization Signal, SSB, and a number of repeated transmissions of the downlink monitoring occasions.

3. The method of claim 2, wherein the paging early indication comprises S×X continuous downlink monitoring occasions, S representing the number of transmission beams of the SSB, X representing a number of repeated transmissions of the transmission beam of the SSB; and a (x×S+K)^{th} downlink monitoring occasion corresponds to a K^{th} transmission beam of the SSB, wherein x = 0, 1, ..., X-1, and K = 1, 2, ...., S.

4. The method of claim 2, wherein the number of repeated transmissions is preconfigured; or, the number of repeated transmissions is predefined; or, the number of repeated transmissions is default.

5. The method of claim 1, further comprising:
offsetting, in response to that an i^{th} downlink monitoring occasion overlapped with an uplink resource exists in the set of downlink monitoring occasions, the i^{th} downlink monitoring occasion overlapped with the uplink resource to a (i+1)^{th} search space, i being an integer greater than or equal to 0.

6. The method of any one of claims 1 to 5, further comprising:
receiving configuration information for indicating an association relationship between the search space corresponding to the set of downlink monitoring occasions and the paging search space.

7. The method of claim 6, wherein
the configuration information comprises a first indication field for indicating an offset value between the search space corresponding to the set of downlink monitoring occasions and the paging search space; or
the configuration information comprises a second indication field for indicating a search space identifier corresponding to the set of downlink monitoring occasions, the search space identifier corresponding to the paging search space.

8. The method of any one of claims 2 to 5, wherein
the number of repeated transmissions of the downlink monitoring occasions is at least two for each transmission beam of the SSB.

9. The method of claim 8, further comprising:
selecting, among the set of downlink monitoring occasions, a downlink monitoring occasion for paging indication monitoring based on terminal implementation.

10. The method of claim 9, further comprising:
when a paging indication signal is detected by the terminal on any one of the set of downlink monitoring occasions, stopping monitoring subsequent downlink monitoring occasions for the same paging early indication.

11. The method of any one of claims 1 to 5, wherein monitoring the paging occasion based on the paging early indication comprises:
when a downlink monitoring occasion indicates a presence of a paging transmission, receiving a paging message on the paging occasion corresponding to the downlink monitoring occasion; or
when a downlink monitoring occasion does not indicate a presence of a paging transmission, skipping monitoring of the paging occasion corresponding to the downlink monitoring occasion.

12. The method of claim 11, wherein receiving the paging message on the paging occasion corresponding to the downlink monitoring occasion comprises:
monitoring, according to a transmission beam of a SSB corresponding to the downlink monitoring occasion, a monitoring position of a transmission beam of a SSB corresponding to the paging occasion and receiving the paging message.

13. A method for power saving, applied to a network device, the method comprising:
periodically broadcasting a paging early indication through at least two transmission beams of a SSB, wherein the paging early indication comprises a downlink monitoring occasion, a search space corresponding to the downlink monitoring occasion being associated with a paging search space of a paging occasion corresponding to the paging early indication, and wherein the paging early indication is configured for instructing a terminal to monitor the paging occasion.

14. The method of claim 13, wherein the paging early indication comprises S×X continuous downlink monitoring occasions, S representing a number of transmission beams of the SSB, X representing a number of repeated transmissions of the transmission beam of the SSB; and a (x×S+K)^{th} downlink monitoring occasion corresponds to a K^{th} transmission beam of the SSB, wherein x = 0, 1, ..., X-1, and K = 1, 2, ...., S.

15. The method of claim 13, wherein a number of repeated transmissions of the downlink monitoring occasion is preconfigured by the network device for the terminal; or, the number of repeated transmissions is predefined; or, the number of repeated transmissions is default.

16. The method of claim 13, further comprising:
offsetting, in response to that the downlink monitoring occasion is overlapped with an uplink resource, the downlink monitoring occasion overlapped with the uplink resource to a next search space.

17. The method of any one of claims 13 to 16, further comprising:
sending configuration information to the terminal, wherein the configuration information is configured for indicating an association relationship between the search space corresponding to the downlink monitoring occasion and the paging search space.

18. The method of claim 17, wherein
the configuration information comprises a first indication field for indicating an offset value between the search space corresponding to the downlink monitoring occasion and the paging search space; or
the configuration information comprises a second indication field for indicating a search space identifier corresponding to the downlink monitoring occasion, the search space identifier corresponding to the paging search space.

19. The method of any one of claims 13 to 16, wherein
a number of repeated transmissions of the downlink monitoring occasions is at least two for each transmission beam of the SSB.

20. An apparatus for power saving, comprising:
a receiving module configured to receive a paging early indication comprising a set of downlink monitoring occasions, wherein a search space corresponding to the set of downlink monitoring occasions in the paging early indication is associated with a paging search space of a paging occasion corresponding to the paging early indication, the set of downlink monitoring occasions corresponding to at least two transmission beams; and
a processing module configured to monitor the paging occasion based on the paging early indication.

21. An apparatus for power saving, applied to a network device, the apparatus comprising:
a sending module configured to periodically broadcast a paging early indication through at least two transmission beams of a SSB, wherein the paging early indication comprises a downlink monitoring occasion, a search space corresponding to the downlink monitoring occasion being associated with a paging search space of a paging occasion corresponding to the paging early indication, and wherein the paging early indication is configured for instructing a terminal to monitor the paging occasion.

22. A terminal, comprising:
a processor; and
a transceiver connected to the processor;
wherein the processor is configured to execute executable instructions to implement the method for power saving of any one of claims 1 to 12.

23. A network device, comprising:
a processor; and
a transceiver connected to the processor;
wherein the processor is configured to execute executable instructions to implement the method for power saving of any one of claims 13 to 19.

24. A computer-readable storage medium, wherein at least one instruction, at least one segment of a program, a code set, or a set of instructions is stored in the computer-readable storage medium and, when executed by a processor, causes the processor to implement the method for power saving of any one of claims 1 to 19.
